# EUROPEAN PATENT APPLICATION

(11) **EP 1 923 197 A1**
(43) Date of publication of application: **21.05.2008**
(21) Application number: 07120567.8
(22) Date of filing: 13.11.2007
(51) Int. Cl.: B29C 45/73, B29C 35/00

(54) **Temperature control system for mold and injection molding method using the same**

(30) Priority: 14.11.2006 KR 20060112320
(71) Applicant: Samsung Electronics Co., Ltd., Suwon-si, Gyeonggi-do 442-743 (KR)
(72) Inventor: Choe, Ick-Sung, Yeongtong-gu Suwon-si Gyeonggi-do (KR); Kim, Young-Ki, Yeongtong-gu Suwon-si Gyeonggi-do (KR); Kang, Shin-Chul, Yeongtong-gu Suwon-si Gyeonggi-do (KR); Chin, Woo-Seok, Yeongtong-gu Suwon-si Gyeonggi-do (KR); Hwang, Chang-Youn, Yeongtong-gu Suwon-si Gyeonggi-do (KR)
(74) Representative: Grünecker, Kinkeldey, Stockmair & Schwanhäusser Anwaltssozietät

(57) **Abstract**

A temperature control system (100) for a mold (109) includes a circulation pipe (191) provided in the mold (109), a heating water circulation section to provide heating water to the circulation pipe (191) to pre-heat the mold (109), a cooling water circulation section to provide cooling water to the circulation pipe (191) to cool the mold (109), and a compressed air circulation section to provide compressed air to the circulation pipe (191) to eject remaining heating water or cooling water within the circulation pipe (191). The compressed air circulation section is adapted to supply the compressed air to the circulation pipe (191) to eject remaining fluid within the circulation pipe (191) before heating water or cooling water is provided to the circulation pipe (191).

## Description

### BACKGROUND OF THE INVENTION

### FIELD OF THE INVENTION

The present invention relates to a mold for injection molding, and more particularly to a temperature control system for the mold.

### DISCUSSION OF THE BACKGROUND

Generally, it may be difficult to control the temperature of a mold in an injection molding process to prepare plastic products. If the temperature of the mold is too low in the beginning of the process, it can cause quality defects in the products. After the temperature of the mold is raised to a suitable temperature, the mold should be continuously cooled to maintain the suitable temperature because the temperature rises when melted resin is injected into the mold. As a result, a molding interval may be increased, which reduces productivity. Therefore, a temperature control system, in which the mold has passages formed therein and the temperature of the mold is controlled within a suitable range by supplying heating and cooling water into the passages, may be used.

However, there are problems in conventional temperature control systems for molds. Cooling water supplied into the mold should eject any remaining heating water that is in the mold and at the same time cool the mold, which reduces the cooling efficiency of the cooling water. Namely, the cooling water may mix with the heating water during the ejection of heating water, which may reduce the cooling efficiency.

Also, the mold may be supplied with heating water to prevent supercooling of the mold, but the heating water may have a similar problem to the cooling water, as discussed above. The heating water, which is supplied into the mold to reduce cooling rate of the mold, may mix with remaining cooling water in the mold during ejection of the cooling water, so the heating efficiency may be reduced. In addition, reduced efficiencies of cooling and heating increase the cooling time and heating time of the mold, which may require additional operations of a cooler and a heater. Consequently, the manufacturing cost may be increased.

Moreover, when the cooling water ejects the heating water while cooling the mold, circulation of the cooling water may not be performed smoothly due to a repulsion pressure of the heating water. In the same way, when the heating water ejects the cooling water while heating the mold, circulation of the heating water may not be performed smoothly due to repulsion pressure of the cooling water.

### SUMMARY OF THE INVENTION

The present invention provides a temperature control system for a mold and an injection molding method using the same, in which cooling water or heating water in the mold may be easily ejected, so that preheating and cooling of the mold may be easily performed.

The present invention also provides a temperature control system for a mold and an injection molding method using the same, which may improve preheating and cooling efficiencies of the mold, so that the time and cost required for the injection molding process may be reduced.

The present invention also provides a temperature control system for a mold and an injection molding method using the same, which may reduce the time required for the injection molding process, so that productivity thereof may be improved.

Additional features of the invention will be set forth in the description which follows, and in part will be apparent from the description, or may be learned by practice of the invention.

The present invention discloses a temperature control system for a mold, which includes a circulation pipe provided in the mold, a heating water circulation section to provide heating water to the circulation pipe to pre-heat the mold, a cooling water circulation section to provide cooling water to the circulation pipe to cool the mold, and a compressed air circulation section to provide compressed air to the circulation pipe to eject remaining heating water or cooling water within the circulation pipe, wherein the compressed air circulation section is adapted to supply the compressed air to the circulation pipe to eject remaining fluid within the circulation pipe before heating water or cooling water is provided to the circulation pipe.

The present invention also discloses an injection molding method including preheating a mold by providing heating water from a heating water circulation section to the mold, injecting melted resin into the preheated mold, ejecting heating water from the mold containing the melted resin by providing compressed air from a compressed air circulation section to the mold, and cooling the mold containing the melted resin by providing cooling water from a cooling water circulation section to the mold.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a schematic view showing a configuration of a temperature control system for a mold according to an exemplary embodiment of the present invention.
FIG. 2 is a view showing a preheating step of the temperature control system of FIG. 1.
FIG. 3 is a view showing a first forming step of the temperature control system of FIG. 1.
FIG. 4 is a view showing a second forming step of the temperature control system of FIG. 1.
FIG. 5 is a view showing a re-preheating step of the temperature control system of FIG. 1.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. Like reference numerals in the drawings denote like elements.

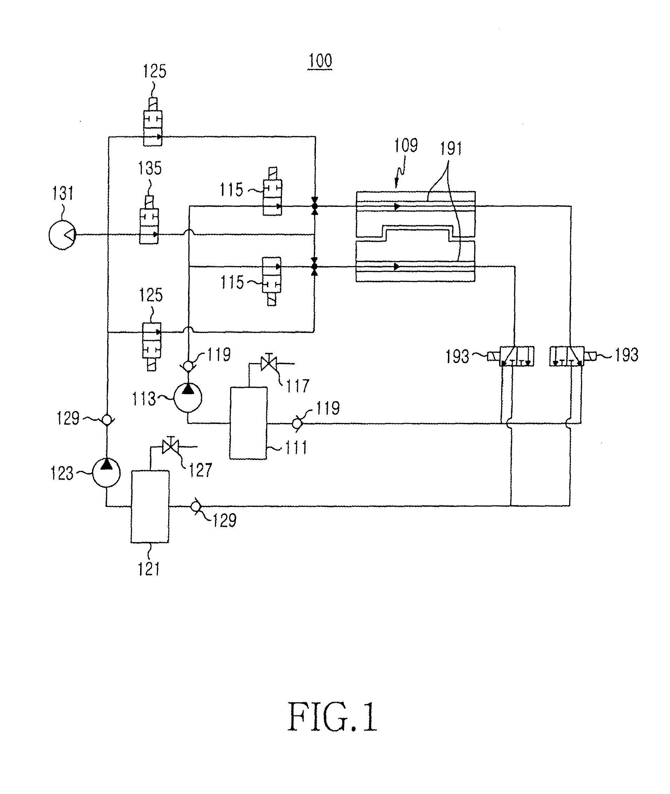

As shown in FIG. 1, a temperature control system 100 for a mold 109 includes a circulation pipe 191 provided in the mold 109, a heating water circulation section, a cooling water circulation section, and a compressed air circulation section, in which the heating water circulation section, the cooling water circulation section, and the compressed air circulation section are connected with the circulation pipe 191, respectively. The temperature control system 100 is adapted to eject remaining cooling water or heating water within the circulation pipe 191 using compressed air before providing heating water or cooling water to the circulation pipe 191.

The heating water circulation section includes a heating water tank 111 and a heating water circulating pump 113 to supply heating water to circulation pipe 191. The heating water tank 111 has an air exhaustion opening 117 disposed therein, and may have a constant temperature equipment or a heating device (not shown) to maintain heating water therein at a constant temperature. The heating water circulating pump 113 is disposed between the heating water tank 111 and the circulation pipe 191 to supply heating water of the heating water tank 111 to the circulation pipe 191. When the heating water circulating pump 113 is working, the circulation pipe 191 is continuously supplied with heating water, wherein heating water, which has circulated through the mold 109 by passing through the circulation pipe 191, is returned into the heating water tank 111.

Here, there is disposed at least one check valve 119 on a path of the heating water circulation section, which is adapted to block heating water flowing therethrough from flowing backward. In this exemplary embodiment, two check valves 119 are respectively disposed at an outlet of the heating water circulating pump 113 and at an inlet of the heating water tank 111.

Between the circulation pipe 191 and the heating water circulating pump 113, there is disposed at least one first solenoid valve 115. Each first solenoid valve 115 is adapted to open a path between the heating water circulating pump 113 and the circulation pipe 191 to allow heating water to pass when the heating water is supplied to the mold 109, and to close the path between the heating water circulating pump 113 and the circulation pipe 191 to prevent fluid within the circulation pipe 191 from flowing backward to the heating water circulating pump 113.

The cooling water circulation section includes a cooling water tank 121 and a cooling water circulating pump 123, with which it supplies cooling water to the circulation pipe 191. The cooling water tank 121 has an air exhaustion opening 127 disposed therein, and may have a constant temperature equipment or a cooling device (not shown) to maintain cooling water therein at a constant temperature. The cooling water circulating pump 123 is disposed between the cooling water tank 121 and the circulation pipe 191 so as to supply cooling water of the cooling water tank 121 to the circulation pipe 191. When the cooling water circulating pump 123 is working, the circulation pipe 191 is continuously supplied with cooling water, wherein cooling water, which has circulated through the mold 109 by passing through the circulation pipe 191, is returned to the cooling water tank 121.

Here, there is disposed at least one check valve 129 on a path of the cooling water circulation section, which is adapted to block cooling water flowing therethrough from flowing backward. In this exemplary embodiment, two check valves 129 are respectively disposed at an outlet of the cooling water circulating pump 123 and at an inlet of the cooling water tank 121.

Between the circulation pipe 191 and the cooling water circulating pump 123, there is disposed at least one second solenoid valve 125. Each second solenoid valve 125 is adapted to open a path between the cooling water circulating pump 123 and the circulation pipe 191 to allow cooling water to pass when the cooling water is supplied to the mold 109, and to close the path between the cooling water circulating pump 123 and the circulation pipe 191 to prevent fluid within the circulation pipe 191 from flowing backward to the cooling water circulating pump 123.

Consequently, when the circulation pipe 191 is supplied with cooling water by the cooling water circulating pump 123, the first solenoid valves 115 close to block the cooling water from flowing into the heating water circulating pump 113, and when the circulation pipe 191 is supplied with heating water by the heating water circulating pump 113, the second solenoid valves 125 close to block the heating water from flowing into the cooling water circulating pump 123.

In the temperature control system 100, the heating water tank 111 and the cooling water tank 121 are respectively connected with the circulation pipe 191, so that they receive the heating water or cooling water flowing out from the circulation pipe 191. The heating water tank 111 and cooling water tank 121 are connected with the circulation pipe 191 via at least one third solenoid valve 193. Each third solenoid valve 193 is adapted to selectively connect one of the heating water tank 111 and the cooling water tank 121 to the circulation pipe 191. Namely, when the heating water circulating pump 113 is working, the third solenoid valves 193 connect the heating water tank 111 to the circulation pipe 191, and when the cooling water circulating pump 123 is working, the third solenoid valves 193 connect the cooling water tank 121 with the circulation pipe 191.

The compressed air circulation section includes a compressor 131 and a fourth solenoid valve 135 and supplies compressed air having a pressure of 3 to 15 kgf/cm² to the circulation pipe 191. Here, the compressed air supplied to circulation pipe 191 flows into one of the heating water tank 111 and the cooling water tank 121, and is exhausted out of the tank 111 or 121 through the air exhaustion opening 117 or 127.

Here, when the heating water circulating pump 113 or the cooling water circulating pump 123 is working, the fourth solenoid valve 135 blocks heating water or cooling water from flowing into the compressor 131.

Consequently, the first, second, and fourth solenoid valves 115, 125, and 135 block fluid from flowing backward from the circulation pipe 191 to the heating water circulating pump 113, the cooling water circulating pump 123, or the compressor 131. In addition, the third solenoid valves 193 connect the circulation pipe 191 with the heating water tank 111 or the cooling water tank 121 based on whether remaining fluid within the circulation pipe 191 is heating water or cooling water.

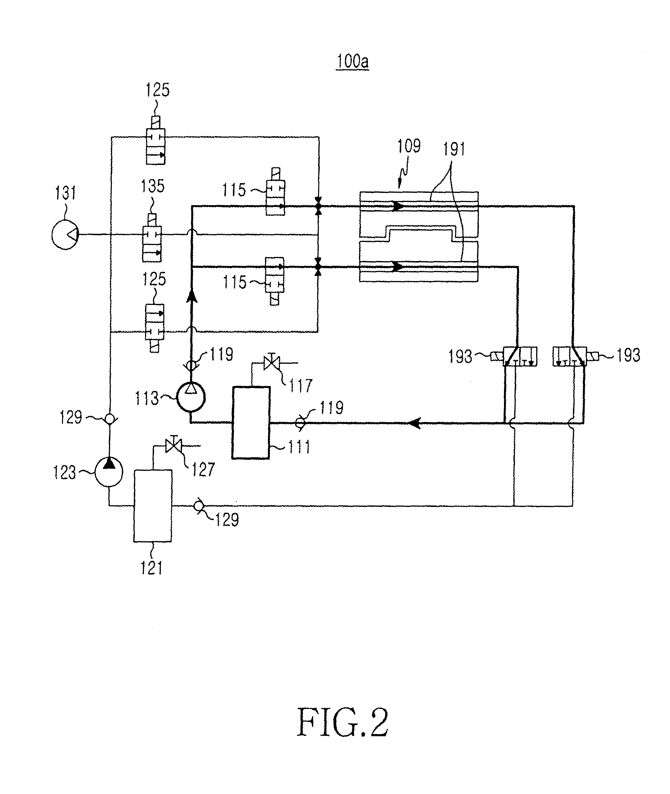

FIG. 2, FIG. 3, FIG. 4, and FIG. 5 sequentially show an injection molding process using the mold 109 with the temperature control system 100 described above. Hereinafter, an injection molding method using the mold 109 with the temperature control system 100 is explained with reference to FIG. 2, FIG. 3, FIG. 4, and FIG. 5.

FIG. 2 shows a preheating step 100a of the mold 109. The preheating step 100a is to preheat the mold 109 before the mold 109 is injected with melted resin, so that the melted resin does not harden while it is injected to the mold 109. Namely, when a temperature of the mold 109 is too low relative to a temperature of the melted resin, only a part of the melted resin, which comes into contact with the mold 109 when injected thereto, is rapidly solidified. As a result, differences in the temperature and the solidification rates of a part of the resin that is first solidified and a remaining part the resin are generated, which may lower the quality of an injection molding product. Therefore, the mold 109 is supplied with heating water before injection of the melted resin so that the mold 109 is preheated to a temperature ensuring that the resin is not rapidly solidified while it is injected. In this exemplary embodiment, the mold 109 is preheated to a temperature above 50°C and then the melted resin is injected to the mold 109.

In the preheating step 100a, each first solenoid valve 115 opens a path between the circulation pipe 191 and the heating water circulating pump 113, while the second and fourth solenoid valves 125 and 135 close the paths connected therewith, respectively. In addition, the third solenoid valves 193 open a path between the circulation pipe 191 and the heating water tank 111 while closing the path between the circulation pipe 191 and the cooling water tank 121. Therefore, when the heating water circulating pump 113 is in operation, the heating water of the heating water tank 111 passes through the circulation pipe 191 and returns to the heating water tank 111.

Although not shown, when the mold 109 is sufficiently preheated, melted resin is injected into the mold 109. When the injection of the melted resin is finished, then the melted resin injected into the mold 109 is solidified. A passage, through which the melted resin is injected into the mold 109, is formed independently of the heating water circulation section, cooling water circulation section, and compressed-air circulation section. The temperature of the mold 109 is rapidly raised when it is injected with the melted resin, but the temperature of the mold is prevented from going beyond 95°C by performing a first forming step 100b and a second forming step 100c.

In this exemplary embodiment, the forming steps are divided into a first forming step 100b and a second forming step 100c. The forming steps promote the solidification of the melted resin injected into the mold 109 by lowering the temperature of the mold 109, for example, the temperature of the entire mold 109 may be uniformly lowered. This is to obtain a uniform characteristic of the injection molding product by solidifying the whole of the melted resin injected into the mold 109 at the same time.

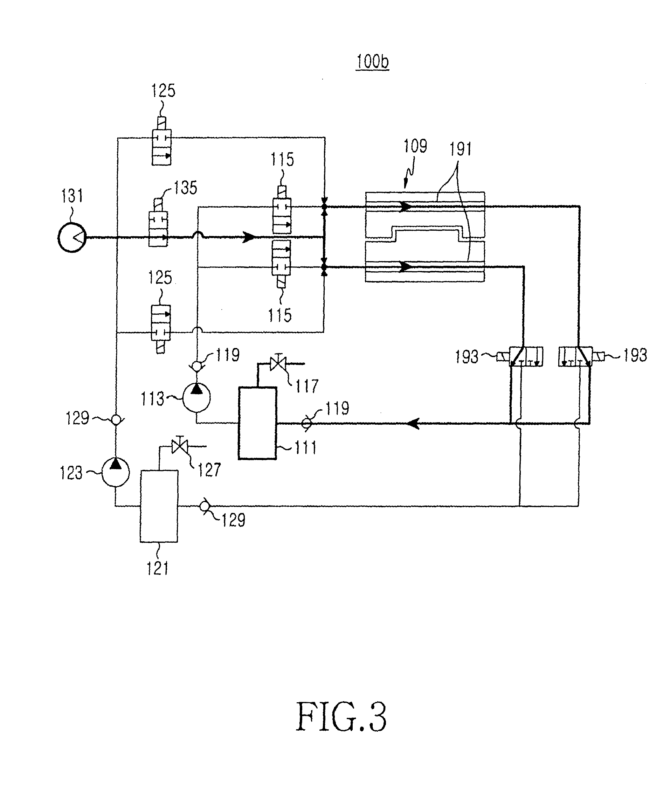

Referring to FIG. 3, the first forming step 100b is a step of ejecting remaining heating water within the mold 109, and ultimately within the circulation pipe 191, by injecting compressed air into the circulation pipe 191. The remaining heating water is thoroughly ejected prior to the injection of cooling water into the mold 109, thereby improving the rate and efficiency of cooling of the mold 109. In first forming step 100b, the first solenoid valves 115 and the second solenoid valves 125 are closed. The fourth solenoid valve 135 opens the path between the compressor 131 and circulation pipe 191. Since the first forming step 100b is the step of ejecting the heating water within the circulation pipe 191, each third solenoid valve 193 opens a path between the circulation pipe 191 and the heating water tank 111.

When the mold 109 is injected with melted resin, the mold 109 is naturally cooled since the temperature of the mold 109 is above room temperature. However, in the exemplary embodiment of the present invention, the cooling water is supplied to the mold 109 after heating water is within the mold 109, which promotes cooling of the mold 109 and ultimately cooling of the melted resin injected into the mold 109.

As the heating water is ejected by providing compressed air into the circulation pipe 191 of the mold 109, the cooling of the mold 109 begins. Thus, the melted resin injected into the mold 109 begins to solidify slowly.

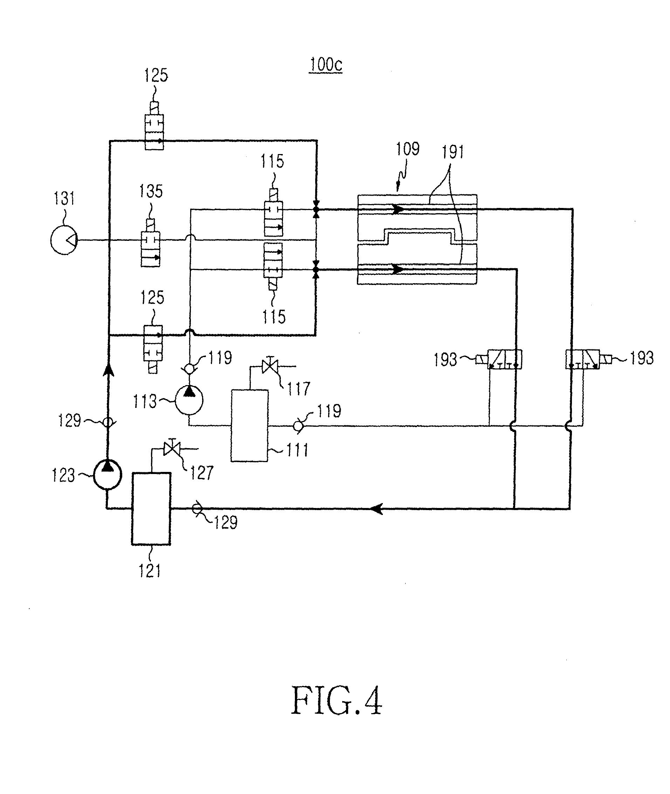

The second forming step 100c is a step to further promote the solidification of melted resin injected into the mold 109, in which cooling water is supplied to the circulation pipe 191. Referring to FIG. 4, the cooling water circulating pump 123 is in operation and the second solenoid valves 125 open in the second forming step 100c. Also, the third solenoid valves 193 connect the circulation pipe 191 with the cooling water tank 121. Here, the first solenoid valves 115 and the fourth solenoid valve 135 are closed.

The cooling water supplied to the circulation pipe 191 cools the mold 109, and thus promotes the solidification of the melted resin injected into the mold. When an injection molding process is performed again after the injection molding product is released from the mold in this step where the cooling water is being supplied into the circulation pipe 191, it may be necessary to monitor the temperature of the mold 109 to ensure that it does not go below 50°C.

If no additional injection molding process is needed, the molding process is finished by releasing the injection molding product from the mold 109. After that, if a new injection molding process is needed, the injection step and the first and second forming steps 100b and 100c may be repeated after performing a re-preheating step 100d.

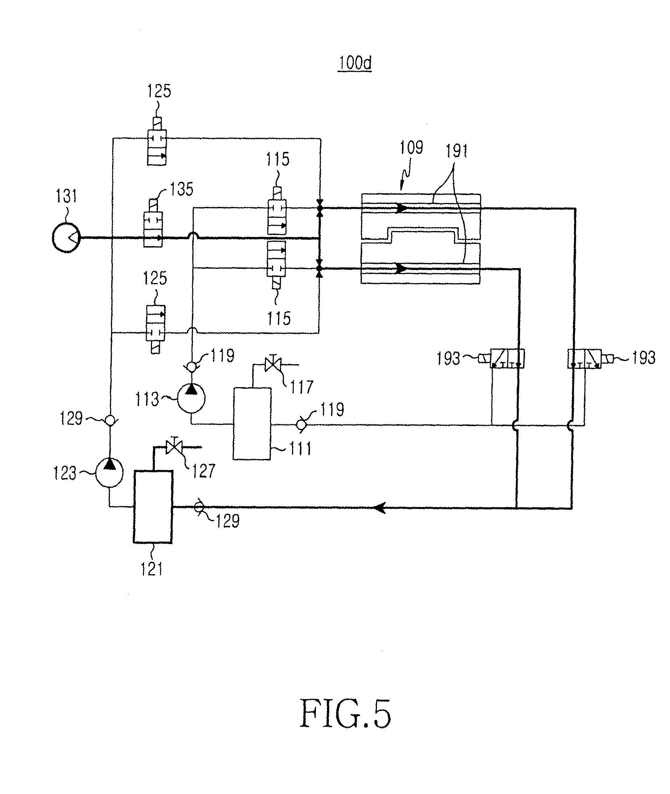

Referring to FIG. 5, during the re-preheating step 100d, the preheating step 100a is repeated after ejecting the cooling water within the circulation pipe 191. This is required when an additional injection molding product is prepared after having released the mold product from the mold 109. Here, the ejecting of the cooling water within the circulation pipe 191 is performed in a way similar to the first forming step 100b, in which the first and second solenoid valves 115 and 125 are closed, and the third solenoid valves 193 connect the circulation pipe 191 with the cooling water tank 121. When the flow path of fluid described above is set up, the compressor 131 supplies compressed air into the circulation pipe 191 to eject the cooling water within the circulation pipe 191.

The compressed air, which passes through the circulation pipe 191 in the first forming step 100b and re-preheating step 100d, is ejected via the air exhaustion opening 117 of the heating water tank 111 or the air exhaustion opening 127 of the cooling water tank 121.

During re-preheating step 100d, the temperature of the mold 109 is maintained above 50°C by performing the preheating step 100a after ejecting the cooling water within the circulation pipe 191. If the temperature of the mold 109 is maintained above 50°C after ejecting the cooling water within the circulation pipe 191, the preheating step 100a of the re-preheating step 100d, i.e. the process for providing the heating water to the circulation pipe 191, may be omitted.

When the injection step, the first forming step 100b, and the second forming step 100c are carried out after the re-preheating step 100d as described above, an injection molding product having the same shape may be prepared, and if this is repeated, products having the same shape may be repeatedly obtained.

According to the temperature control system for a mold and injection molding method using the same of the exemplary embodiments of the present invention as described above, since the remaining heating and cooling water within the mold are ejected using compressed air when the mold is repeatedly preheated and cooled, fluid may easily flow through the mold in the preheating and cooling processes. In addition, by preventing the heating water and the cooling water from mixing with each other using compressed air, the cooling and heating efficiencies of the mold may be improved. Consequently, the cooling time and the heating time of the mold may be reduced, which may improve the productivity thereof. Also, the improved efficiencies of the cooling and heating may result in reduced costs, such as a reduced cost of fuel.

The temperature of the mold according to the exemplary embodiment of the present invention is limited to the range from 50°C to 95°C, but it may be variously modified by those skilled in the art according to conditions, such as the types of melted resin to be injected into the mold and the design dimension of injection molding products to be prepared.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

## Claims

1. A temperature control system (100) for a mold (109), comprising:
a circulation pipe (191) provided in the mold (109);
a heating water circulation section to provide heating water to the circulation pipe (191) to pre-heat the mold (109);
a cooling water circulation section to provide cooling water to the circulation pipe (191) to cool the mold (109); and
a compressed air circulation section to provide compressed air to the circulation pipe to eject remaining heating water or cooling water within the circulation pipe (191),
wherein the compressed-air circulation section is adapted to supply the compressed air to the circulation pipe (191) to eject remaining fluid within the circulation pipe (191) before heating water or cooling water is provided to the circulation pipe (191).

2. The temperature control system of claim 1, wherein the heating water circulation section comprises:
a heating water tank (111);
a heating water circulating pump (113) connected to the heating water tank (111), the heating water circulating pump (113) being adapted to provide heating water of the heating water tank (111) to the circulation pipe (191); and
an air exhaustion opening (117) disposed on the heating water tank (111),
wherein heating water having circulated through the circulation pipe (191) returns to the heating water tank (111).

3. The temperature control system of claim 2, wherein compressed air, which is supplied to the circulation pipe (191) to eject the remaining heating water within the circulation pipe (191), is exhausted via the air exhaustion opening (117) of the heating water tank (111) after circulating through the circulation pipe (191).

4. The temperature control system of claim 2 or 3, further comprising a solenoid valve (115) disposed between the circulation pipe (191) and the heating circulation pump (113),
wherein the solenoid valve (115) disposed between the circulation pipe (191) and the heating circulation pump (113) is adapted to block cooling water or compressed air from flowing backward to the heating circulation pump (113).

5. The temperature control system of one of the preceding claims, wherein the cooling water circulation section comprises:
a cooling water tank (121);
a cooling water circulating pump (123) connected to the cooling water tank (121), the cooling water circulating pump (123) being adapted to provide cooling water of the cooling water tank (121) to the circulation pipe (191); and
an air exhaustion opening (127) disposed in the cooling water tank (121),
wherein cooling water having circulated through the circulation pipe (191) returns to the cooling water tank (121).

6. The temperature control system of claim 5, wherein compressed air, which is supplied to the circulation pipe (191) to eject the remaining cooling water within the circulation pipe (191), is exhausted via the air exhaustion opening (127) of the cooling water tank (121) after circulating through the circulation pipe (191).

7. The temperature control system of claim 5 or 6, further comprising a solenoid valve (125) disposed between the circulation pipe (191) and the cooling water circulating pump (123),
wherein the solenoid valve (125) disposed between the circulation pipe (191) and the cooling water circulating pump (123) is adapted to block heating water or compressed air from flowing backward to the cooling water circulating pump (123).

8. The temperature control system according to one of the preceding claims, further comprising a solenoid valve (193) disposed at an end of the circulation pipe (191),
wherein the solenoid valve (193) disposed at the end of the circulation pipe (191) is adapted to circulate heating water flowing out from the circulation pipe (191) through the heating water circulation section or to circulate cooling water flowing out from the circulation pipe (191) through the cooling water circulation section.

9. The temperature control system according to one of the preceding claims, further comprising a solenoid valve (135) disposed between the compressed air circulation section and the circulation pipe (191),
wherein the solenoid valve (135) disposed between the compressed air circulation section and the circulation pipe (191) is adapted to block heating water or cooling water from flowing backward to the compressed air circulation section.

10. The temperature control system according to one of the preceding claims, wherein the compressed air circulation section comprises a compressor (131) and air compressed by the compressor (131) is supplied to the circulation pipe (191).

11. The temperature control system according to one of the preceding claims, wherein the heating water circulation section and the cooling water circulation section each further comprise a check valve (119,129),
wherein the check valve (119) of the heating water circulation section is adapted to block heating water of the heating water circulation section from flowing backward, and the check valve (129) of the cooling water circulation section is adapted to block cooling water of the cooling water circulation section from flowing backward.

12. The temperature control system according to one of the preceding claims, wherein the compressed air circulation section is adapted to supply compressed air having a pressure of 3 to 15 kgf/cm² to the circulation pipe (191).

13. The temperature control system according to one of the preceding claims, wherein the mold is maintainable above a temperature of 50°C using the heating water circulation section, and is maintainable below a temperature of 95°C using the cooling water circulation section.

14. An injection molding method, comprising:
preheating a mold (109) by providing heating water from a heating water circulation section to the mold (109);
injecting molten resin into the preheated mold (109);
ejecting heating water from the mold (109) containing the molten resin by providing compressed air from a compressed air circulation section to the mold (109); and
cooling the mold (109) containing the molten resin by providing cooling water from a cooling water circulation section to the mold (109).

15. The injection molding method of claim 14, wherein preheating the mold (109) comprises preheating the mold (109) to a temperature above 50°C, and cooling the mold (109) comprises cooling the mold (109) below a temperature of 95°C.

16. The injection molding method of claim 14 or 15, further comprising ejecting cooling water from the mold (109) by providing compressed air from the compressed air circulation section to the mold (109), and then providing heating water from the heating water circulation section to the mold (109).

17. The injection molding method according to one of claims 14 to 16, wherein the mold (109) is maintained above a temperature of 50°C by ejecting cooling water from the mold (109) and providing heating water to the mold (109).

18. The injection molding method of claim 16, wherein the entire method is repeated.
